# EUROPEAN PATENT SPECIFICATION

(11) **EP 0 461 605 B1**
(45) Date of publication and mention of the grant of the patent: **01.03.1995**
(21) Application number: 91109539.6
(22) Date of filing: 11.06.1991
(51) Int. Cl.: A23L 1/20, A23L 1/212, A23L 1/337

(54) **Method for manufacturing snack foods**
Verfahren zur Herstellung eines Snack-Nahrungsmittels
Procédé de production d'aliments type snack

(30) Priority: 12.06.1990 JP 153043/90
(43) Date of publication of application: 18.12.1991
(73) Proprietor: House Food Industrial Co., Ltd., Higashiosaka-shi Osaka-fu (JP)
(72) Inventor: Taga, Kazumitsu, Neyagawa-shi, Osaka-fu (JP); Narukami, Toshihiko, Ikoma-shi, Nara-ken (JP); Kawakado, Misako, Kashihara-shi, Nara-ken (JP)
(74) Representative: VOSSIUS & PARTNER

(56) References cited:
- EP-A- 0 331 820
- DE-A- 2 720 174
- GB-A- 1 200 523
- GB-A- 1 477 753
- GB-A- 2 163 938
- US-A- 4 889 730
- PATENT ABSTRACTS OF JAPAN vol. 11, no. 332 (C-455)(2779) 29 October 1987,& JP-A-62 118869 (INOUE KAISANBUTSUTEN K.K.) 30 May 1987,
- Handbuch der Lebensmittelchemie, Bd V, Teil 1; Kohlenhydratreiche Lebensmittel, by J.Schormüller, 1967, Springer Verlag, Berlin, p.407: "Kohlenhydrate".

## Description

The present invention relates to a method for manufacturing a health snack food in which a vegetable, fruit, bean or seaweed is used in a large amount as an ingredient.

There have been put on the market a variety of processed foods which make the most use of characteristic properties peculiar to ingredients such as a variety of vegetables and fruits, for instance, naturalness, fibrousness and favorableness for health. For instance, Japanese Unexamined Patent Publication (hereinafter referred to as "J. P. KOKAI") No. Sho 52-76450 discloses a method for preparing dried banana which comprises adding 5 to 100 parts by weight of water to 100 parts by weight of banana whose skin has been peeled off, rapidly mashing the banana and simultaneously admixing air bubbles to give a paste, freezing the paste and then subjecting the frozen paste to a vacuum freeze-drying process. Although this method makes it possible to give porous dried banana any shape, the resulting product is less crisp.

In addition, J.P. KOKAI No. Sho 50-6738 discloses a method for preparing ingredients for dried foods which comprises heating and boiling a vegetable such as a root vegetable or a fruit vegetable till it is sufficiently softened and then dehydrating the heated products. Moreover, J.P. KOKAI No. Sho 59-227264 discloses a method for preparing a vegetable pasta which comprises mixing water with a composition comprising a vegetable, an alginate, propylene glycol alginate and a starch, then extruding the mixture into a pasta form and drying the pasta. Further, J.P. KOKAI No. Sho 54-145250 discloses a method for preparing a sheet-like food having a water content ranging from 4 to 15% which comprises adding water to an edible vegetable, grinding the mixture and finely macerating the bundled fibers thereof to give a uniform sheet-like product and then drying the same. However, these methods do not make the most use of the characteristic properties peculiar to the ingredients per se such as color and taste and texture of, for instance, a vegetable and the resulting product does not have sufficient crispness.

GB-A-1 200 523 discloses a process in which chips are dried at a temperature below 180°F (below about 82°C) and preferably below 160°F (below about 71°). In the Examples a two-step drying process is used and a temperature of 160°F is used in both drying steps.

GB-A-2 163 938 discloses a process for the production of dehydrated legumes which is capable of essentially instant, substantially uniform reconstitution into food products which exhibit organoleptic characteristics closely simulating those which are manifested in similar products prepared from natural raw material. The process does not include a special drying step but a one-step process is disclosed using temperatures in the range of 120-250°F (about 49-121°C) and preferably of from 140-180°F (about 60-82°C).

Accordingly, a primary object of the present invention is to provide a method for manufacturing a snack food having crispness which has never been attained before without impairing the characteristic properties peculiar to a natural ingredient per se such as a vegetable, fruit and the like.

This object is achieved by a method for manufacturing a snack food comprising the steps of preparing a paste of a ground or pulverized natural ingredient selected from the group consisting of vegetables, fruits, beans and seaweeds, the paste having a moisture content ranging from 50 to 85% by weight and a saccharide content ranging from 5 to 35% by weight, and then drying the paste to give snack food having a moisture content ranging from 1 to 6% by weight and a bulk density ranging from 0.3 to 0.8 g/ml, characterized in that the paste is dried by first subjecting the paste to high temperature drying in which it is calcined at 110 to 160°C for 10 to 20 minutes and then to low temperature drying in which it is calcined at a temperature ranging from 80 to 100°C for 20 to 80 minutes.

Other objects and features of the present invention will be apparent from the following description and Examples.

The present invention will be further explained in more detail below in conjunction with the following preferred embodiments.

Examples of the natural ingredients usable in the present invention are vegetables such as spinach, edible burdock, pumpkin, onion, cabbage and carrot; fruits such as apple, pineapple and banana; beans such as green peas and broad bean; and seaweeds such as undaria pinnatifida and tangle. These natural ingredients can be used as a mixture of two or more of these, but are preferably used alone from the viewpoint of making use of characteristic properties such as color, taste and texture of each individual ingredient. These vegetables and the like are, if necessary, subjected to the removal of harshness and peeling off the skin and then mashed or pulverized before use. In the present invention, it is preferred to use ingredients which are mashed to such an extent that they can pass through a 5 mesh sieve.

In the method of the present invention, the foregoing natural ingredients are first formed into a paste having the following properties:
- Moisture content:: 50 to 85% by weight (hereinafter referred to as simply "%") and preferably 60 to 80%;
- Saccharide content:: 5 to 35% and preferably 10 to 25%.

In this respect, the mashed natural ingredients can optionally be dried while taking the amount of additives subsequently added to the mashed product so that the final moisture content thereof would fall within the range defined above. In other words, if the moisture content is outside the foregoing range, the molding properties of the resulting paste is impaired in cooperation with the saccharide content and accordingly a final snack food having a bulk density falling within the specific range cannot be manufactured. In addition, if the saccharide content which varies depending on the ingredients used is low, it is desirable to add a saccharide so that the final saccharide content of the product falls within the range defined above. In such case, it is preferred to use a variety of starches as the saccharide components to be supplemented. Moreover, a particularly preferred starch is a potato starch. To control the saccharide content of the final product to the specific range defined above is very important for imparting crispness to the snack food finally obtained.

In the method of the present invention, the paste may optionally comprise a variety of proteins and oils and fats which can further improve the crispness and palatability of the snack food finally obtained from the paste. Examples of such proteins are egg white, soybean proteins and milk proteins and these proteins are preferably added to the paste so that the content thereof ranges from 1 to 5% on the basis of the total weight of the paste-like product. This is because if the protein content is outside of the range, the resulting snack food does not have an improved crispness. On the other hand, examples of the oils and fats are butter, margarine, shortening and salad oil. These oils and fats are desirably added to the paste so that the content thereof ranges from 5 to 15% on the basis of the total weight of the paste-like product. These oils and fats are also added for the purpose of achieving the same effect as that achieved by the addition of the proteins.

The addition of a seasoning is not necessary in the method of the present invention, but a sweetener such as sugar may be added in such an amount that the total content of the saccharide falls within the range defined above. Moreover, other seasonings such as common salt can be added in a small amount.

When the foregoing paste-like product is prepared according to the method of the present invention, it is desirable that the content of the natural ingredients in the paste range from 50 to 100% and preferably 60 to 90% on the basis of the total weight of the paste. Thus, there can be prepared snack foods exhibiting characteristic properties peculiar to the starting materials such as taste, palatability and color. In addition, the resulting snack foods are excellent for use as health foods since they contain a large amount of the natural ingredients which are rich in fibrous substances and hence have a high fiber content.

In the method of the present invention, where vegetables, fruits or seaweeds are used as the natural ingredients, it is preferred to select the ingredients to be incorporated into the paste such that the hardness of the paste comprising the foregoing components is adjusted to a range of from 3 to 90 g. On the other hand, when beans are used as the natural ingredients, it is preferred to select the ingredients to be incorporated into the paste such that the hardness of the paste comprising the foregoing components is adjusted to a range of from 100 to 400 g. This results in the formation of a paste having good molding properties and thus the resulting paste can be formed into any shape such as sticks and sheets. In this respect, the hardness of the paste is determined using Fudow Rheometer NRM-2010J-CW (available from Fudow Co., Ltd.) under the following conditions: a meter sensitivity of 100 g; a set stress of 10; a sample-table speed of 30 cm/min; a sample volume of 50 ml (charged in a 100 ml volume beaker); an adapter with a 10 mm diameter is used for viscosity measurement; and a sample temperature of room temperature (20 to 24° C).

In the method of the present invention, the paste-like substance thus obtained is then formed into any shape and thereafter calcined to give a snack food having a moisture content ranging from 1 to 6% by weight, preferably 1 to 4% by weight and a bulk density ranging from 0.3 to 0.8 g/ml, preferably 0.3 to 0.5 g/ml. More specifically, the paste-like substance is formed into, for instance, a sheet-like product having a thickness ranging from 1 to 5 mm and then dried at a temperature ranging from 80 to 180 ° C for 30 to 100 minutes. This drying process is performed by first subjecting the molded product to high temperature drying in which the product is calcined at 110 to 160 ° C for 10 to 20 minutes and then to low temperature drying in which it is calcined at a temperature ranging from 80 to 100 ° C for 20 to 80 minutes. Thus, the molded paste is hardened while maintaining its shape during the first high temperature calcination and it is dried during the second low temperature calcination while maintaining the characteristic properties peculiar to the natural ingredients such as color and taste. As a result, the method can make the most use of the characteristic properties of the ingredients without causing marked change in the taste due to the application of heat during the drying process.

A preferred embodiment of the present invention thus comprises the steps of preparing a paste of ground or pulverized natural ingredients, the paste having a moisture content ranging from 60 to 80% by weight, a saccharide content ranging from 10 to 25% by weight, a hardness ranging from 3 to 90 g and a content of the natural ingredients ranging from 50 to 100% by weight, then forming the paste into a shape and drying the paste by first subjecting it to high temperature drying performed at 110 to 160° C for 10 to 20 minutes and then to low temperature drying performed at 80 to 100° C for 20 to 80 minutes to give a snack food having a moisture content ranging from 2 to 4% and a bulk density ranging from 0.3 to 0.5 g/ml.

According to the method of the present invention, there can be provided snack foods exhibiting excellent palatability which has never been attained before mainly comprising a vegetable and the like, having a moisture content ranging from 1 to 6% and a bulk density ranging from 0.3 to 0.8 g/ml.

Thus, the snack foods manufactured according to the method of the present invention can variously be put on the market as health confectionery individually packaged or arranged in a container.

The present invention will hereinafter be described in more detail with reference to the following working Examples.

### Example 1

Spinach was boiled in a 1% aqueous common salt solution, then drained and ground to give a paste. Thereafter, the paste was dried at 50° C till the moisture content thereof reached about 83%. Then 1 g of sugar, 0.2 g of common salt, 10 g of potato starch, 10 g of egg and 5 g of white sesame were added to and uniformly mixed with 42 g of the resulting paste to give a paste-like substance having a moisture content of 61%, a saccharide content of 16%, a protein content of 1.8% and a hardness of 64 g. The paste-like substance was squeezed into sticks having a width of about 6 mm, a height of about 6 mm and a length of about 10 cm, then heated to 150° C for 10 minutes to dry the same and further heated to 100° C for 40 minutes to give a snack food containing a large amount of spinach (having a moisture content of 2% and a bulk density of 0.4 g/ml).

### Example 2

The skin of edible burdock was peeled off, the edible burdock was cut into pieces having a length of about 10 cm, subjected to the removal of harshness by immersing the pieces in a 2% by weight aqueous vinegar solution, then boiled till it became sufficiently soft, drained and pulverized to form a paste. Then 3 g of sugar, 0.3 g of common salt, 6 g of potato starch and 6 g of egg were added to and uniformly mixed with 55 g of the resulting paste (the resulting product had a moisture content of 68%, a saccharide content of 25%, a protein content of 1% and a hardness of 64 g). The resulting mixture was squeezed into sticks having a width of about 6 mm, a height of about 6 mm and a length of about 10 cm, then heated to 150° C for 12 minutes to dry the same and further heated to 100° C for 40 minutes to give a snack food containing a large amount of edible burdock (having a moisture content of 2% and a bulk density of 0.3 g/ml).

### Example 3

An onion was cut in round slices, introduced into hot water to boil for about 20 minutes to weaken the strong taste and the irritating smell of the onion. Thereafter, the boiled onion slices were drained, then mashed to give a paste and the paste was boiled down till the moisture content thereof reached about 89%. Then 0.2 g of common salt and 6 g of potato starch were added to and uniformly mixed with 55 g of the resulting paste (the resulting product had a moisture content of 82%, a saccharide content of 16% and a hardness of 10 g). The resulting mixture was squeezed into sticks having a width of about 6 mm, a height of about 6 mm and a length of about 10 cm, then heated to 150 ° C for 12 minutes to dry the same and further heated to 100° C for 40 minutes to give a snack food containing a large amount of onion (having a moisture content of 3% and a bulk density of 0.4 g/ml).

### Example 4

After removing the skin of a carrot and pulverizing it to form a paste-like substance, the paste was squeezed to reduce 100 g of the paste to 40 g to weaken the smell peculiar thereto. Then 6 g of sugar, 0.2 g of common salt and 6 g of potato starch were added to and uniformly mixed with 55 g of the resulting paste (the resulting product had a moisture content of 60%, a saccharide content of 22% and a hardness of 15 g). The resulting mixture was squeezed into sticks having a width of about 6 mm, a height of about 6 mm and a length of about 10 cm, then heated to 150° C for 12 minutes to dry the same and further heated to 100° C for 40 minutes to give a snack food containing a large amount of carrot (having a moisture content of 2% and a bulk density of 0.5 g/ml).

### Example 5

After removing the skin of a banana and boiling the same so that the central portion thereof was maintained at 70 ° C for not less than 5 minutes to thus deactivate the oxidases present therein, the banana was mashed to form a paste. Separately, 6 g of butter were softened by bringing its temperature back to room temperature, 3 g of sugar were added to and mixed with the butter and then 6 g of egg was gradually added to and mixed with the resulting mixture. The mixture thus prepared was added to and uniformly mixed with 55 g of the foregoing banana paste (the resulting product had a moisture content of 60%, a saccharide content of 21%, a protein content of 1% and an oil and fat content of 7%). The resulting mixture was squeezed into sticks having a width of about 6 mm, a height of about 6 mm and a length of about 10 cm, then heated to 150° C for 10 minutes to dry the same and further heated to 100° C for 60 minutes to give a snack food containing a large amount of banana (having a moisture content of 4% and a bulk density of 0.4 g/ml).

### Example 6

After removing the skin and the core of an apple, it was cut into proper pieces and immersed in a 1% by weight aqueous common salt solution. The pieces were drained, followed by the addition of 0.1% by weight of common salt thereto to prevent the browning thereof and the pulverization of the mixture to give a paste of apple. Thereafter, the paste was boiled down to a moisture content of about 77% by weight. Separately, 6 g of butter were softened by bringing its temperature back to room temperature, 2 g of sugar were added to the butter and sufficiently mixed together and then 6 g of egg were gradually added to and mixed with the resulting mixture. To the mixture thus prepared, 55 g of the foregoing apple paste and 6 g of potato starch were added and these ingredients were uniformly mixed together (the resulting product had a moisture content of 64%, a saccharide content of 26%, a protein content of 1% and an oil and fat content of 6.6%). The resulting mixture was squeezed into sticks having a width of about 6 mm, a height of about 6 mm and a length of about 10 cm, then heated to 150 ° C for 10 minutes to dry the same and further heated to 100° C for 60 minutes to give a snack food containing a large amount of apple (having a moisture content of 3% and a bulk density of 0.5 g/ml).

### Example 7

Dried undaria pinnatifida (wakame) was immersed into water to reconstitue it to its original state, then drained and ground to form a paste. On the other hand, 6 g of shortening and 1 g of sugar were mixed, and then 6 g of egg were added thereto. 40 g of the paste of undaria pinnatifida and 6 g of potato starch were added to the resultant mixture and mixed uniformly to give a paste-like substance having a moisture content of 73%, a saccharide content of 11%, a protein content of 3% and a hardness of 23 g. The paste-like substance was squeezed into sticks having a width of about 6 mm, a height of about 6 mm and a length of about 10 cm, then heated to 150° C for 10 minutes to dry the same and further heated to 100° C for 40 minutes to give a snack food containing a large amount of undaria pinnatifida (having a moisture content of 2% and a bulk density of 0.6 g/ml).

### Example 8

Pods of broad beans were taken out and immersed into hot water to boil them for about 10 minutes. The thus boild broad beans were peeled off and ground to form a paste. Then 0.2 g of common salt and 6 g of potato starch were added to and uniformly mixed with 55 g of the resulting paste to give a paste-like substance having a moisture content of 65%, a saccharide content of 23%, a protein content of 9% and a hardness of 310 g. The paste-like substance was squeezed into sticks having a width of about 6 mm, a height of about 6 mm and a length of about 10 cm, then heated to 150° C for 12 minutes to dry the same and further heated to 100° C for 30 minutes to give a snack food containing a large amount of broad beans (having a moisture content of 3% and a bulk density of 0.4 g/ml).

## Claims

1. A method for manufacturing a snack food comprising the steps of preparing a paste of a ground or pulverized natural ingredient selected from the group consisting of vegetables, fruits, beans and seaweeds, the paste having a moisture content ranging from 50 to 85% by weight and a saccharide content ranging from 5 to 35% by weight, and then drying the paste to give snack food having a moisture content ranging from 1 to 6% by weight and a bulk density ranging from 0.3 to 0.8 g/ml, characterized in that the paste is dried by first subjecting the paste to high temperature drying in which it is calcined at 110 to 160°C for 10 to 20 minutes and then to low temperature drying in which it is calcined at a temperature ranging from 80 to 100°C for 20 to 80 minutes.

2. The method of claim 1 wherein the content of the natural ingredient in the paste ranges from 50 to 100% by weight on the basis of the total weight of the paste.

3. The method of any one of claims 1 or 2 wherein the moisture content of the paste ranges from 60 to 80% by weight on the basis of the total weight of the paste.

4. The method of any one of claims 1 to 3 wherein the saccharide content of the paste ranges from 10 to 25% by weight on the basis of the total weight of the paste.

5. The method of any one of claims 1 to 4 wherein the snack food has a bulk density ranging from 0.3 to 0.5 g/ml.

6. The method of any one of claims 1 to 5 wherein the paste is formed into a shape prior to the drying process.

7. The method of any one of claims 1 to 6 wherein the vegetable is spinach, edible burdock, pumpkin, onion, cabbage or carrot and the fruit is apple, pineapple or banana.

8. The method of any one of claims 1 to 6 wherein the bean is green peas or broad bean and the seaweed is undaria pinnatifida or tangle.

9. The method of any one of claims 1 to 8 wherein the ingredient is ground or pulverized to an extent that it can pass through a 5 mesh sieve.

10. The method of any one of claims 1 to 9 wherein the hardness of the paste is controlled to the range of from 3 to 90 g in case where the natural ingredient is vegetables, fruits or seaweeds.

11. The method of any one of claims 1 to 10 wherein the paste further comprises a protein and has a protein content ranging from 1 to 5% by weight on the basis of the total weight of the paste.

12. The method of any one of claims 1 to 10 wherein the paste further comprises oils and fats and has an oil and fat content ranging from 5 to 15% by weight on the basis of the total weight of the paste.

13. A method for preparing a snack food according to claim 1 comprising the steps of preparing a paste of a ground or pulverized natural ingredient selected from the group consisting of vegetables, fruits and seaweeds, the paste having a moisture content ranging from 60 to 80% by weight, a saccharide content ranging from 10 to 25% by weight, a hardness ranging from 3 to 90 g and a content of the natural ingredient ranging from 50 to 100% by weight, then forming the paste into a shape and drying the paste by first subjecting it to high temperature drying performed at 110 to 160°C for 10 to 20 minutes and then to low temperature drying performed at 80 to 100°C for 20 to 80 minutes to obtain a snack food having a moisture content ranging from 2 to 4% and a bulk density ranging from 0.3 to 0.5 g/ml.

## Patentansprüche

1. Verfahren zur Herstellung eines Snack-Nahrungsmittels, umfassend die Schritte zur Herstellung einer Paste aus einer gemahlenen oder pulverisierten natürlichen Zutat, ausgewählt aus der Gruppe bestehend aus Gemüse, Früchte, Bohnen und Algen, wobei die Paste einen im Bereich von 50 bis 85 Gew.-% liegenden Feuchtigkeitsgehalt und einen im Bereich von 5 bis 35 Gew.-% liegenden Kohlenhydratgehalt hat, und anschließendes Trocknen der Paste, wobei ein Snack-Nahrungsmittel mit einem im Bereich von 1 bis 6 Gew.-% liegenden Feuchtigkeitsgehalt und einer im Bereich von 0,3 bis 0,8 g/ml liegenden Schüttdichte hat, erhalten wird, dadurch gekennzeichnet, daß die Paste dadurch getrocknet wird, daß sie zuerst einer Hochtemperaturtrocknung unterzogen wird, bei der sie bei 110 bis 160°C 10 bis 20 Minuten calciniert wird, und dann einer Niedertemperaturtrocknung, bei der sie bei einer im Bereich von 80 bis 100°C liegenden Temperatur 20 bis 80 Minuten calciniert wird.

2. Verfahren gemäß Anspruch 1, bei dem der Gehalt an natürlicher Zutat in der Paste im Bereich von 50 bis 100 Gew.-%, basierend auf dem Gesamtgewicht der Paste, liegt.

3. Verfahren gemäß einem der Ansprüche 1 oder 2, bei dem der Feuchtigkeitsgehalt der Paste im Bereich von 60 bis 80 Gew.-%, basierend auf dem Gesamtgewicht der Paste, liegt.

4. Verfahren gemäß einem der Ansprüche 1 bis 3, bei dem der Kohlenhydratgehalt der Paste im Bereich von 10 bis 25 Gew.-%, basierend auf dem Gesamtgewicht der Paste, liegt.

5. Verfahren gemäß einem der Ansprüche 1 bis 4, bei dem das Snack-Nahrungsmittel eine Schüttdichte im Bereich von 0,3 bis 0,5 g/ml hat.

6. Verfahren gemäß einem der Ansprüche 1 bis 5, bei dem die Paste vor dem Trocknungsverfahren geformt wird.

7. Verfahren gemäß einem der Ansprüche 1 bis 6, bei dem das Gemüse Spinat, eßbare Klette, Kürbis, Zwiebel, Kohl oder Karotte und die Früchte Apfel, Ananas oder Banane sind.

8. Verfahren gemäß einem der Ansprüche 1 bis 6, bei dem die Bohnen grüne Erbsen oder dicke Bohnen sind, und die Algen Undaria pinnatifida oder Tang sind.

9. Verfahren gemäß einem der Ansprüche 1 bis 8, bei dem die Zutat bis zu einem Grad gemahlen oder pulverisiert wird, daß sie ein 5 mesh Sieb passieren kann.

10. Verfahren gemäß einem der Ansprüche 1 bis 9, bei dem die Härte der Paste in dem Fall, daß die natürliche Zutat Gemüse, Früchte oder Algen ist, im Bereich von 3 bis 90 g eingestellt wird.

11. Verfahren gemäß einem der Ansprüche 1 bis 10, bei dem die Paste weiter ein Protein umfaßt und einen Proteingehalt im Bereich von 1 bis 5 Gew.-%, basierend auf dem Gesamtgewicht der Paste, hat.

12. Verfahren gemäß einem der Ansprüche 1 bis 10, bei dem die Paste weiter Öle und Fette umfaßt und einen Öl- und Fettgehalt im Bereich von 5 bis 15 Gew.-%, basierend auf dem Gesamtgewicht der Paste, hat.

13. Verfahren zur Herstellung eines Snack-Nahrungsmittels gemäß Anspruch 1, umfassend die Schritte der Herstellung einer Paste aus einer gemahlenen oder pulverisierten natürlichen Zutat, ausgewählt aus der Gruppe bestehend aus Gemüse, Früchte und Algen, wobei die Paste einen Feuchtigkeitsgehalt im Bereich von 60 bis 80 Gew.-%, einen Kohlenhydratgehalt im Bereich von 10 bis 25 Gew,-%, eine Härte im Bereich von 3 bis 90 g und einen Gehalt an natürlicher Zutat im Bereich von 50 bis 100 Gew.-% hat, anschließendes Formen der Paste und Trocknen der Paste, wobei sie zuerst 10 bis 20 Minuten einer bei 110 bis 160°C durchgeführten Hochtemperaturtrocknung und dann 20 bis 80 Minuten einer bei 80 bis 100°C durchgeführten Niedertemperaturtrocknung unterzogen wird, wobei ein Snack-Nahrungsmittel mit einem Feuchtigkeitsgehalt im Bereich von 2 bis 4% und einer Schüttdichte im Bereich von 0,3 bis 0,5 g/ml erhalten wird.

## Revendications

1. Procédé de production d'un aliment en portions comprenant les étapes consistant à préparer une pâte d'un composant naturel broyé ou pulvérisé choisi dans le groupe constitué par des légumes, des fruits, des haricots ou des algues, la pâte ayant une teneur en eau comprise entre 50 et 85% en masse et une teneur en glucides comprise entre 5 et 35% en masse, puis à sécher la pâte pour obtenir un aliment en portions ayant une teneur en eau comprise entre 1 et 6% en masse et une masse volumique comprise entre 0,3 et 0,8 g/ml, caractérisé en ce qu'on sèche la pâte en soumettant tout d'abord la pâte à un séchage à température élevée dans lequel on la cuit entre 110 et 160°C pendant 10 à 20 min, puis à un séchage à température faible dans lequel on la cuit à une température comprise entre 80 et 100°C pendant 20 à 80 min.

2. Procédé selon la revendication 1, dans lequel la teneur en composant naturel de la pâte est comprise entre 50 et 100% en masse par rapport à la masse totale de la pâte.

3. Procédé selon l'une quelconque des revendications 1 ou 2, dans lequel la teneur en eau de la pâte est comprise entre 60 et 80% en masse par rapport à la masse totale de la pâte.

4. Procédé selon l'une quelconque des revendications 1 à 3, dans lequel la teneur en glucides de la pâte est comprise entre 10 et 25% en masse par rapport à la masse totale de la pâte.

5. Procédé selon l'une quelconque des revendications 1 à 4, dans lequel l'aliment en portions possède une masse volumique comprise entre 0,3 et 0,5 g/ml.

6. Procédé selon l'une quelconque des revendications 1 à 5, dans lequel on façonne la pâte en une certaine forme avant l'opération de séchage.

7. Procédé selon l'une quelconque des revendications 1 à 6, dans lequel le légume est l'épinard, la bardane comestible, le pâtisson, l'oignon, le chou ou la carotte et le fruit est la pomme, l'ananas ou la banane.

8. Procédé selon l'une quelconque des revendications 1 à 6, dans lequel le haricot est le pois potager ou la fève et l'algue est l'undaria pinnatifida ou une laminaire.

9. Procédé selon l'une quelconque des revendications 1 à 8, dans lequel on broie ou on pulvérise le composant à tel point qu'il peut passer au travers d'un tamis de 5 mesh.

10. Procédé selon l'une quelconque des revendications 1 à 9, dans lequel on contrôle la dureté de la pâte de façon à se situer dans la gamme allant de 3 à 90 g dans le cas où le composant naturel est des légumes, des fruits ou des algues.

11. Procédé selon l'une quelconque des revendications 1 à 10, dans lequel la pâte comprend de plus une protéine et présente une teneur en protéines comprise entre 1 et 5% en masse par rapport à la masse totale de la pâte.

12. Procédé selon l'une quelconque des revendications 1 à 10, dans lequel la pâte comprend de plus des huiles et des graisses et présente une teneur en huiles et graisses comprise entre 5 et 15% en masse par rapport à la masse totale de la pâte.

13. Procédé de préparation d'un produit en portions selon la revendication 1, comprenant les étapes consistant à préparer une pâte d'un composant naturel broyé ou pulvérisé choisi dans le groupe constitué par des légumes, des fruits et des algues, la pâte ayant une teneur en eau comprise entre 60 et 80% en masse, une teneur en glucides comprise entre 10 et 25% en masse, une dureté comprise entre 3 et 90 g et une teneur en composant naturel comprise entre 50 et 100% en masse, puis à façonner la pâte en une certaine forme et à sécher la pâte en la soumettant tout d'abord à un séchage à température élevée réalisé entre 110 et 160°C pendant 10 à 20 min, puis à un séchage à un séchage à température faible réalisé entre 80 à 100°C pendant 20 à 80 min pour obtenir un aliment en portions ayant une teneur en eau comprise entre 2 et 4% et une masse volumique comprise entre 0,3 et 0,5 g/ml.
